# EUROPEAN PATENT SPECIFICATION

(11) **EP 1 427 152 B1**
(45) Date of publication and mention of the grant of the patent: **08.07.2009**
(21) Application number: 03300092.8
(22) Date of filing: 19.08.2003
(51) Int. Cl.: H04L 12/46, H04L 12/56, H04L 12/24

(54) **Virtual local area network auto-discovery methods**
Verfahren zu automatischen Erkennung des virtuellen, lokalen Netzes
Méthodes de localisation automatique du réseau local virtuel

(30) Priority: 27.08.2002 US 227839
(43) Date of publication of application: 09.06.2004
(73) Proprietor: Alcatel Canada Inc., Kanata, Ontario K2K 2E6 (CA)
(72) Inventor: NGo, Chuong Ngoc, Ottawa, Ontario K2G 6G5 (CA); Jacob, André Neil Dominic, Nepan, Ontario K2G 4V2 (CA); Zabihi, Attaullah, Ottawa, Ontario K2B 8C8 (CA); Proulx, Denis Armand, Kanata, Ontario K2W 1B6 (CA)
(74) Representative: Nicolle, Olivier

(56) References cited:
- WO-A-01/86380
- WO-A-02/37224

## Description

The invention relates to configuration management of data transport networks, and in particular addresses the problem of discovering an existing Virtual Local Area Network (VLAN) configuration in a bridged network.

A Local Area Network (LAN) includes a group of data network nodes and various data transport equipment that share, a common communications medium and other data transport resources. Usually, LANs provide data transport services for homes, small businesses and departments within large enterprises.

Most LANs are confined to a single building or group of adjacent buildings. However legacy LANs technology is inadequate in supporting: an ever increasing telecommuting work force, remote office connectivity, decentralized government services, etc. because of a limited reach associated therewith.

Customer-owned disparate LANs can be interconnected over large distances via dedicated wire and wireless links. Another alternative to disparate LAN interconnectivity can be achieved by connecting each LAN segment to a carrier data transport network. The separate LAN segments are said to be bridged. The Internet is one of the largest public carrier networks. A group of interconnected LANs is referred to as a Wide Area Network (WAN). Nevertheless, customers incur a large overhead in provisioning, managing and maintaining disparate LANs.

Data carrier networks can be said to provide connection-less and connection-oriented data transport services. The Internet is the largest connection-less data transport network typically employing the Internet Protocol (IP) to convey packets. Selected portions of the Internet, provisioned by certain service providers, offer connection-oriented data transport typically employing exemplary technologies such as Asynchronous Transfer Mode (ATM) and Multi-Protocol Label Switching (MPLS). Various other data transport technologies exist. Connection-less technologies have enjoyed a long term utilization and represent a large portion of the installed infrastructure. Connection-less technologies are prevalent in LAN environments and will therefore represent the focus of the present description without limiting the application of the described concepts thereto.

Connection-less data transport technologies regard data transport media as broadcast media via which the participating data network nodes exchange data packets. While broadcasting data is conducive to efficient data interchange within a LAN, in bridging geographically displaced LANs via carrier data networks, the broadcast-type data transport leads to data transport inefficiencies in the service provider's data transport network and perhaps to potential disclosure of closely-held information. The connection-less broadcast-type data transport in carrier networks does however benefit from redundant data transport - the broadcast-type data transport in effect routing data transport around failed data transport equipment by design.

Recent developments in the data communications field have brought about a Virtual LAN (VLAN) paradigm enabling the LAN to be extended into homes, remote office sites, geographically displaced government offices, etc. over existing installed infrastructure. VLAN technology enables logical grouping of data network nodes and related data transport infrastructure to extend LANs beyond the restrictions imposed by the underlying infrastructure. Data network nodes associated with the same VLAN, albeit connected to different LAN segments, behave as if participating in the same LAN, benefiting from the broadcast-type information exchange therebetween. Data network nodes in each LAN segment of the VLAN are unaware as to whether they are connected to a single LAN segment or multiple bridged LAN segments. The logical grouping of data network nodes reduces the provisioning, the management, and the reconfiguration of data transport infrastructure for the customer by providing logical network design solutions with minimal changes to physical installed infrastructure.

A multitude of independent carriers cooperate in provisioning carrier WANs of the likes of the Internet. Although, in theory, data transport network infrastructure may be installed such that only one data transport path may exist between any two data network nodes; the amount of network configuration information that must be considered for such a data network design would be overwhelming and, as it was mentioned above, undesirable as a level of data transport redundancy is desirable for sustained data transport.

As portions of the VLAN are typically provisioned over carrier networks, VLAN associated routing of data packets within carrier networks can be engineered to follow definite paths while still benefiting from redundant connectivity. The logical associativity defining the VLAN provides data traffic differentiation which enables encryption based protection of closely-held information. VLAN technologies enable routing of data packets based on the VLAN associativity thereof.

For a connection-less data transport network to function optimally, only one active data transport path should exist between any two data transport nodes. Multiple active paths between data network nodes cause loops in the associated network. If a loop exists in the network topology, the potential exists for duplication of data packets. When loops occur, a packet switching node deems at least one destination data network node to be reachable via multiple data ports associated with the packet switching node. Under such conditions, forwarding algorithms employed at packet switching nodes are designed to replicate data packets for transmission over the multiple data ports. It is desirable to limit such conditions to purposely configured instances thereof.

Developments in data packet routing include the adoption of a spanning-tree protocol and associated spanning-tree determination algorithms. The spanning-tree protocol is a link layer management protocol that prevents the establishment of undesirable data transport loops in data transport paths while providing support for data transport redundancy.

To provide path redundancy, the spanning-tree protocol defines a tree of in-use interconnecting data transport links that spans all data switching nodes in the associated data transport network. The spanning-tree protocol configures certain redundant data transport links into a stand-by state. If a data transport network segment previously under the influence of the spanning-tree protocol becomes unreachable, or if spanning-tree protocol configuration parameters change, the spanning-tree algorithm reconfigures the in-use spanning-tree topology and re-establishes data transport to the unreachable data transport network segment by activating for use selected stand-by data transport links.

When the spanning-tree protocol is used in the carrier data transport network, the operation of the spanning-tree protocol is transparent to customer data network nodes and perhaps even to customer LANs. In the case in which a distributed spanning-tree algorithm is used, data transport nodes cooperatively determine the in-use spanning-tree topology autonomously. Typically, information regarding the in-use spanning-tree may not be propagated to the service provider. Dependent on a particular deployment of, and the services supported over a carrier data transport network, multiple in-use spanning-trees may be defined and coexist. For example, a spanning-tree of in-use data transport links may be defined for high data throughput utilizing high bandwidth links, while another spanning-tree of in-use data transport links may be defined for low data transport latency utilizing the fewest number of data transport links.

In order to reduce network management and service provisioning overheads, the spanning-tree protocol, as mentioned above, is implemented in a decentralized fashion, with each data network node and data switching nodes running spanning-tree determination algorithms. A collective exchange of information therebetween provides the sufficient input to determine and establish spanning-tree connectivity. While such a solution reduces the need for analyst intervention in re-establishing data transport connectivity subsequent to data transport infrastructure failures, the active in-use spanning-tree exists typically only as operational parameter configurations within individual data transport equipment, the combination of which is unavailable to the analyst and the NMS for re-provisioning VLAN connectivity.

As mentioned above, the use of the spanning-tree protocol avoids the creation of loops in the data transport network by putting certain VLAN data transport trunks in a stand-by state thereby preventing the replication of data packets thereto as would otherwise result. The spanning-tree algorithm(s) operate on corresponding physical VLAN trunk ports which are actually provisioned either in one of the in-use or the stand-by state. Prior art VLAN provisioning methods typically call only for the VLAN trunk ports and switches associated with in-use data transport trunks to be included in VLAN provisioning. VLAN access ports are connected via access links to the customer LANs interconnected into corresponding customer VLANs.

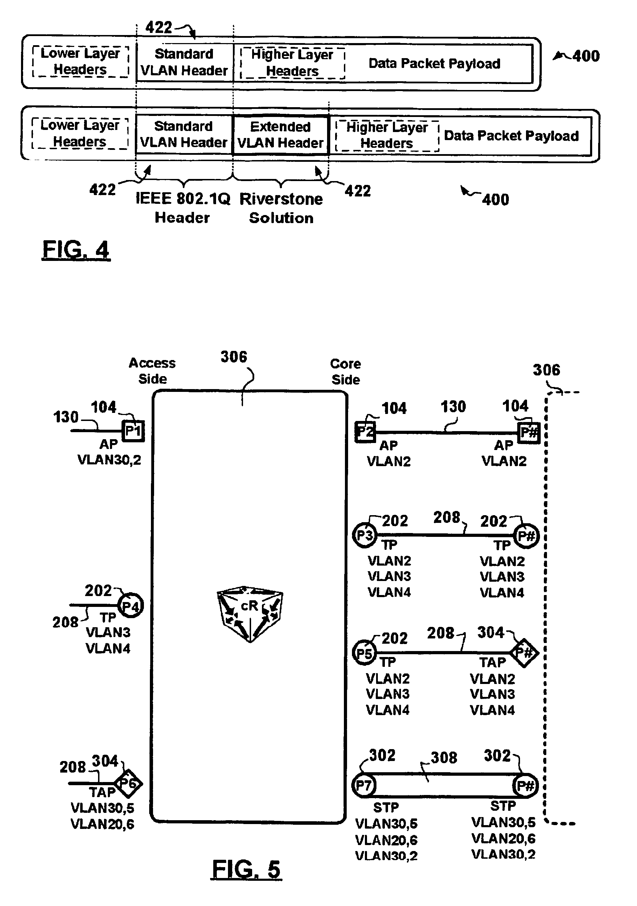

Data packets are routed through a carrier data transport network over a loop-free spanning-tree of data transport trunks using Open Systems Interconnect (OSI) Layer-2, typically Media Access Control ADDResses (MAC ADDRs) conveyed in data packet headers schematically shown in FIG. 4 when the trunk ports are provisioned (associated) with only one VLAN. In the case where a trunk port is provisioned to support more than one VLAN, a VLAN identifier is added in the packet headers in accordance with the IEEE 802.1Q protocol incorporated herein by reference. The VLAN identifier is used to switch data packets through the network and to differentiate VLAN data traffic. The VLAN identifier is removed from packet headers when no longer needed.

Another development in the field, development which addresses VLAN provisioning methods is exemplified by CISCO's VLAN Trunk Protocol (VTP). The VLAN trunk protocol is a CISCO Systems proprietary solution to propagating manually configured VLAN information between adjacent VTP aware network elements. The propagation of VTP information is implemented as differentiated data traffic over VLAN 1 which means that VLAN support must be apriori activated for each VTP aware network element. To date only selected CISCO Catalyst products support the VTP protocol. The suitability for using the VTP protocol is dependent on: the definition of VTP domains of which other vendor equipment would be unaware, the establishment of VTP server/client relationships between VTP aware (CISCO only) network elements, memory for storage of VTP related information at each participating VTP aware network element, the ability to parse VTP specific frames, the ability to respond to a particular reserved broadcast address in exchanging VTP related information, etc. Although some benefit may be derived from the use of the VTP protocol over a CISCO only network equipment infrastructure, numerous shortcomings of the present definition of the VTP protocol call for the reduction of the extent of provisioned VLANs, which runs counter to the need to extent VLANs beyond the restrictions imposed by the physical network infrastructure. Various workarounds call for quick manual re-provisioning of VLAN support as the only reactive solution.

The demand for VLAN services has been and continues to be so great that the 12bits allocated in accordance with the IEEE 802.1Q VLAN protocol is not enough. The IEEE 802.1Q VLAN protocol makes it possible for the provisioning of over 4000 VLANs with some VLAN identifiers being reserved for VLAN protocol functions and future feature development. The proliferation of VLAN services and the multitude of service providers offering VLAN interconnectivity solutions, has created situations in which VLAN service customers own part of the VLAN infrastructure. A significant number of VLAN customers own the necessary VLAN provisioning customer premise equipment. VLAN customers in charge of their respective infrastructure perceive the necessary VLAN identifier allocation restrictions imposed by VLAN service providers restrictive, bothersome, and not portable. The portability of IEEE 802.1Q VLAN identifiers is important as VLAN customers change service providers as needs for data transport services change for reasons such as, but not limited to, needing additional capacity deliverable only over different physical layer technologies supported only by select service providers.

Inadvertent sharing of VLAN identifiers between customers becomes possible in a provisioning scenario in which VLAN uniqueness is not guaranteed.

Inadvertent sharing of VLAN identifier between customers leads to possible data packet exchange between customers' private networks compromising data transfer security possibly leading to unwanted disclosure of closely held information. There is a need to guard against this security risk in providing VLAN identifier portability.

Developments in the field addressing the issue of VLAN identifier portability while ensuring data traffic differentiation include a proposed extension to the IEEE 802.1Q VLAN protocol put forward by Riverstone Networks. The proposal calls for the use of an additional extension 802.1Q packet header to provide additional extended identifying bits. The use of the additional packet header provides for a hierarchical grouping of VLANs referred to VLAN stacking. FIG. 4 is a schematic diagram showing exemplary packet structures as specified in the IEEE 802.1Q VLAN protocol and the Riverstone solution, respectively. The Riverstone solution enables reuse of standard IEEE 802.1Q VLAN identifiers as long as the combined VLAN identification is unique.

Prior art VLAN provisioning is performed manually by configuring individual data transport and switching equipment to provision VLAN trunk ports and VLAN access ports of manually selected data switching nodes in a service provider (carrier) network. Typically the VLAN provisioning involves using Element Management Systems (EMS) on which VLAN provisioning parameters are entered and sent to each corresponding data network node. As such a plurality of EMS systems are used corresponding to each one of: customer premise equipment, edge network nodes, switching nodes, routers, bridges, etc.

As mentioned above, in the event of a service-affecting fault, the spanning-tree protocol will recalculate the spanning-tree and re-assign data transport trunks in-use. The problem with the prior art solutions presented above, lies in determining which data transport links are chosen for use by the spanning-tree protocol. Such manual determination can be difficult and time-consuming, thereby making manual provisioning of VLANs likewise difficult and time-consuming. This is especially the case in connection with large and complex wide area networks. Manual re-provisioning of the VLANs is an error prone procedure.

The use of stackable VLAN technology complicates VLAN provisioning and VLAN management tasks due to the larger number of possible VLANs, while stackable VLAN provisioning tools are limited to network element management (EMS) specific tools such as Softelia™, provided by Riverstone Networks, and therefore suffer from the same shortcomings mentioned above. Other EMS solutions are provided by Orchestream Plc.

Connectivity determining spanning-tree algorithms may be run by analysts centrally via Network Management Systems (NMS). To do so an analyst and the NMS used must posses a large amount of information regarding the data transport infrastructure in a realm of management of the NMS. Central spanning-tree determination benefits from an availability of the resulting spanning-tree for the analysts perusal in providing support for manual VLAN provisioning. Such solutions however tend to be reactive as data transport equipment failure instances require the analyst's attention in reestablishing connectivity and re-provisioning VLANs to re-establish VLAN related communications over reconfigured a spanning-tree topology.

Another prior art solution such as the Alcatel 5620 Network Management System (NMS), enables central VLAN provisioning. VLAN provisioning information is entered into the NMS and then propagated to the various field installed VLAN provisioning equipment to effect the desired configurations. The provisioning information is also kept in a database associated with the NMS.

A problem with this prior art central provisioning solution is that: if any change made to a VLAN is not initiated from the NMS, then the current VLAN configuration and provisioning status is not known to the NMS. This could be the case, for example, when a new NMS is being deployed in a network having already provisioned VLAN's, when communication between NMS and field-installed VLAN provisioning equipment is lost, or when NMS and EMS tools are used simultaneously in VLAN provisioning. To alleviate this condition EMS solutions must be used to manually determine VLAN configuration discrepancies and, either manually change the configuration of the data network node or manually update the NMS. This procedure is time consuming and an analyst having an extensive knowledge of VLAN technologies is required to perform thereof.

Discrepancies between VLAN configuration information between field installed VLAN equipment and central NMS database may also occur due to NMS failure and/or communications network failures. Although, such instances are seldom encountered, such instances also trigger the spanning-tree to reconfigure the data transport paths in the communications network aggravating such situations. The VTP protocol provides some relief in failure recovery but the VTP protocol uses EMS configuration techniques only without reporting to NMS systems.

WO 0186380 discloses a system and a method for detecting and suppressing faults on network elements located in various logical groups. The method of fault status suppression in a communication network includes receiving fault data from a detector identifying fault status of a network element; mapping logical group of the detector and the network element; and suppressing fault on the network element when the detector and the network element are in different logical groups and there is a fault on a device providing communication between the logical groups. The logical groups include VLANs (virtual local area networks), VPNs (virtual private network), LAN (local area network) Emulation over ATM, and other types of logical groups.

WO 0237224 discloses improved methods, devices and systems for storage management in digital networks.

Therefore, one object of the present invention is to provide a VLAN auto-discovery application tool allowing to reduce VLAN provisioning overheads, fast recovery from Network Management System (NMS) failures, reduced recovery times from communications network failures, and lessen the reliance of VLAN provisioning on trained personnel.

More precisely, the present invention provides a VLAN auto-discovery application tool comprising:
a) an activator for initiating a VLAN configuration auto-discovery process performed on field installed communications network equipment;
b) a correlator processing VLAN configuration information; and
c) a plurality of interactive elements collectively displaying VLAN provisioning information on an associated human-machine interface
the correlator derives VLAN-specific configuration ensuring data traffic differentiation between provisioned VLANs.

Thus, the invention provides the capability to automatically discover VLANs in a communications network. This capability is useful in determining the configuration and status of provisioned VLANs in the communications network, and for detecting VLAN provisioning conflicts developed in the communications network. These functions are otherwise not easily performed with known available Element Management Systems (EMS). Advantages are derived from a centralized VLAN auto-discovery solution which reduces VLAN provisioning overheads, enables fast recovery from Network Management System (NMS) failures, reduces recovery times from communications network failures, etc.

In accordance with another aspect of the invention, a method of auto-discovery of existing Virtual Local Area Network (VLAN) configuration in a bridged network is provided. The method includes steps of: reconciling a data transport infrastructure in a data transport network; reconciling data transport node configurations; gathering nodal VLAN configurations from all data transport nodes; correlating the data transport infrastructure information, node configuration information and nodal VLAN configurations; and extracting network-wide provisioned VLAN configuration subject to discrepancies.

The features and advantages of the invention will become more apparent from the following detailed description of the preferred embodiment(s) with reference to the attached diagrams wherein:
FIG. 1 is a schematic diagram showing data network elements implementing a connected data transport infrastructure;
FIG. 2 is a schematic diagram showing configured interconnected data transport network elements providing standard IEEE 802.1Q VLAN support;
FIG. 3 is a schematic diagram showing configured interconnected data transport network elements providing backbone VLAN support;
FIG. 4 is a schematic diagram showing exemplary packet structures as specified in the IEEE 802.1Q VLAN protocol and the Riverstone solution, respectively;
FIG. 5 is a schematic diagram showing a VLAN identifier association hierarchy in provisioning VLAN services;
FIG. 6 is a schematic diagram showing a managed entity object hierarchy used in providing network management and service provisioning;
FIG. 7 is a schematic diagram showing an managed entity containment hierarchy used in providing network management and service provisioning;
FIG. 8 is a flow diagram showing process steps implementing VLAN auto-discovery in accordance with an exemplary embodiment of the invention; and
FIG. 9 is a schematic diagram showing interactive elements of a human-machine interface used in accordance with the exemplary embodiment of the invention in effecting VLAN auto-discovery.

It will be noted that in the attached diagrams like features bear similar labels.

Currently, there is not known any VLAN provisioning tool that provides automatic discovery of existing: standard IEEE 802.1Q VLAN configurations, stackable backbone VLAN configurations, and bindings of 802.1Q VLANs to corresponding stackable backbone VLANs in a bridged network. Functions of determining the existence, configuration, and status of VLANs in a communications network are required to properly manage VLAN services and equipment, and to ensure that service commitments are met.

Therefore, it is desirable to provide a process of discovering VLANs in a bridge network. Preferably, the process will be automated, thereby providing more efficiency than present manual discovery methods.

The present invention provides methods for Network Management Systems (NMS) to determine the existence, configuration, and status of VLANs in a network reliably and efficiently, thereby enhancing a network provider's ability to meet commitments to customers while reducing service provisioning overheads and operating costs.

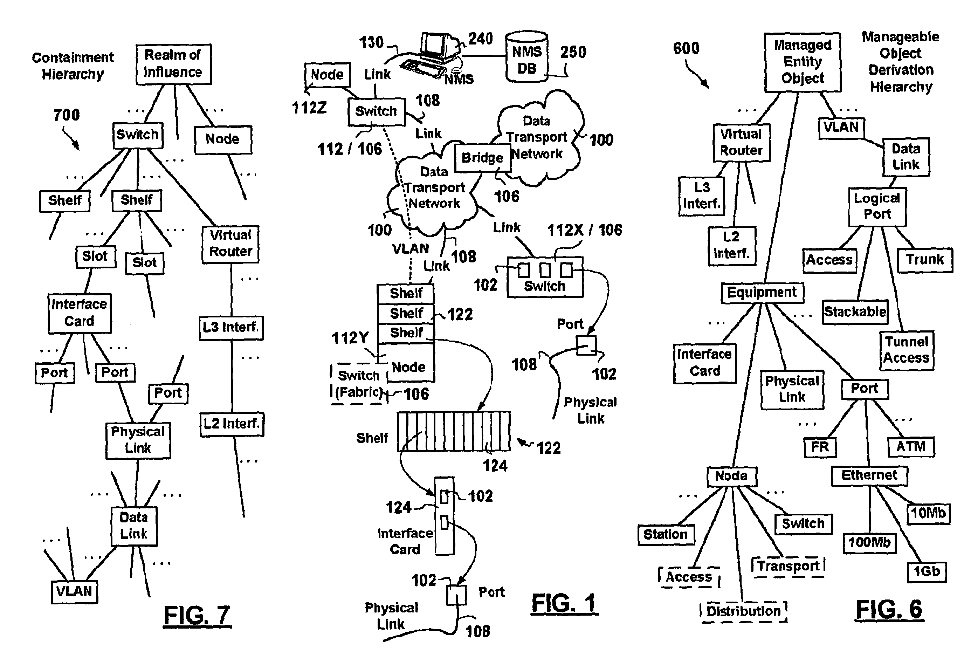

With regards to data network equipment, for example data switching nodes schematically shown in FIG. 1, a data network equipment vendor may chose to implement an integral data network node device 122X having a data switching processor operable to switch data packets between a group of ports 102, while another data network equipment vendor may chose a customizable implementation of a data switching node 112Y including: a switching fabric, an equipment rack divided into shelves 122, each shelf 122 having slot connectors for connection with interface cards 124, each interface card 124 having at least one port 102. Physical data transport links 108 are connected between ports 102.

Although conceptually the two the data switching nodes 112X and 112Y provide a similar data switching function, each equipment implementation is adapted for a different environment: the former data switching node 112X is more adapted to enterprise solutions as a private data network node, perhaps further adapted to be connected to carrier networks 100; while the latter data switching node 112Y is better adapted for high data throughput in the core of public data transport networks 100. Typically the former 112X implements a small number of data transport protocols while for the latter 112Y, data transport protocols are implemented on interface cards 124 and/or ports 102 - providing for a flexible/configurable deployment thereof. Data network nodes 112 which are data switching nodes (122X/122Y) may provide routing of data traffic conveyed. The integral data switching node 112X as mentioned above is operable as a routing device 106, while the data switching node 112Y may have at least one virtual router 106 associated therewith. Other data network nodes 112Z may be distinct from an associated router 106. The latter configuration is typically found customer owned LAN segments.

It is understood that the interconnected physical data network equipment alluded to above are part of larger body of managed data network entities enabling the provision of data services. The data network entities also include, but are not limited to: logical ports, logical interfaces, end-to-end data links, paths, virtual paths, etc. VLAN auto-discovery is complicated by the variety of such data transport entities used.

Connectivity information, configuration information, service support information, etc. regardless of its origin is held by data network nodes 112 (and switches 106) in the realm of management of a network management and service provisioning solution. How the connectivity information, configuration information, service support information, etc. was initially provided is described elsewhere and in accordance with the prior art includes the use of element management techniques and tools. Suffice it to say that, as far as VLAN provisioning is concerned, the spanning-tree protocol is both guided in its operation via and has an effect, including the modification of, the connectivity information, configuration information, service support information, etc. Distributed nodal spanning-tree algorithms may operate on nodal connectivity information, configuration information, service support information, etc. independently in parallel exchanging information therebetween.

Additional developments in the art include co-pending commonly assigned Unites States Patent Application entitled "Improved Virtual Local Area Network Provisioning in Bridged Networks" filed on even date, bearing attorney reference number 13596-US which is incorporated herein by reference; and co-pending commonly assigned Unites States Patent Application entitled "Improved Stackable Virtual Local Area Network Provisioning in Bridged Networks" filed on even date, bearing attorney reference number 13598-US which is incorporated herein by reference; describe methods of VLAN provisioning in accordance with which customer VLANs are provisioned over all manageable VLAN infrastructure, and backbone stackable VLANs are provisioned over all manageable (backbone) VLAN carrier network infrastructure, respectively. VLAN and backbone VLAN provisioning is completed by association of VLAN access ports and tunnel access ports with VLAN trunk links and stackable trunk links. Central provisioning solutions thereof are proposed. Actual transport of VLAN related traffic is subject to data transport paths determined via the use of the spanning-tree protocol.

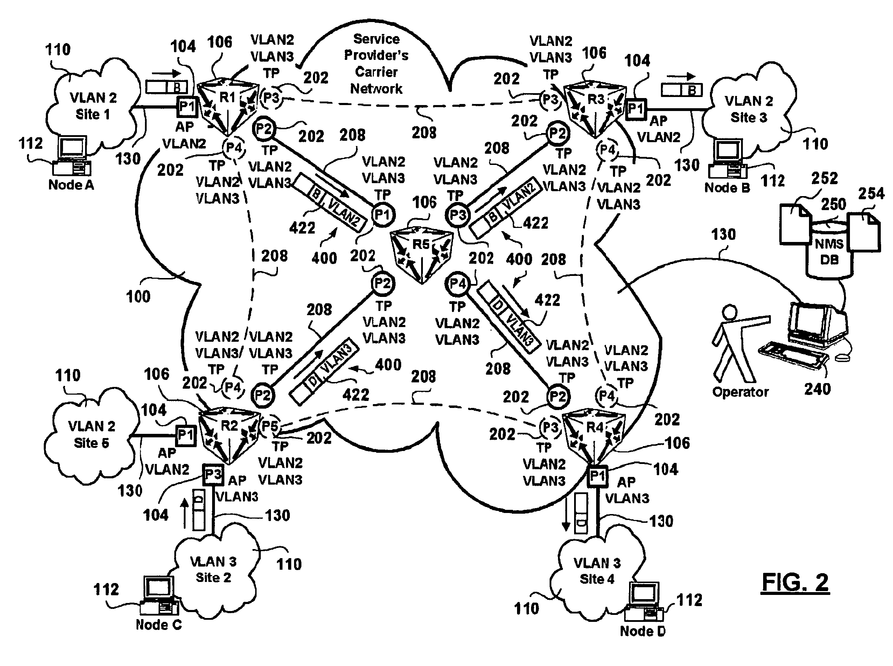

FIG. 2 is a schematic diagram showing configured interconnected data transport elements providing standard IEEE 802.1Q VLAN support.

In accordance with the above mentioned co-pending commonly assigned US patent application attorney reference 13596-US, each VLAN is provisioned on all trunk links 208 in the service provider's data transport network 100-including stand-by designated data transport trunk links 208-dashed, providing for VLAN pre-provisioning at improved operational efficiencies. This technique eliminates the need to determine specific in-use data transport trunk links 208 and specific in-use trunk ports 202 on specific switches 106 participating in the active in-use spanning-tree topology.

As the spanning-tree protocol prevents the formation of logical data transport loops, VLAN provisioning over stand-by designated data transport trunk links 208-dashed is not a concern. In fact, pre-provisioning data transport trunk links 208-dashed for all provisioned VLANs has the advantage of making the data transport trunk links 208-dashed ready to carry VLAN traffic should the spanning-tree reconfigure. VLAN provisioning database records held by each switch 106 in the carrier's data transport network 100 show (see FIG. 2) the VLAN identifiers associated with each trunk port 202. VLAN auto-discovery is complicated by the above presented VLAN provisioning methods and manual VLAN discovery is rendered inutile.

The service provider's data transport network 100 typically carries data traffic associated with more than one VLAN. IEEE 802.1Q VLAN identifiers must be included in VLAN associated packet headers 422 (see FIG. 4) to provide traffic differentiation. The packets 400 (see FIG. 2) are switched through the carrier's data transport network 100 using the VLAN identifier in accordance with the IEEE 802.1Q protocol specification.

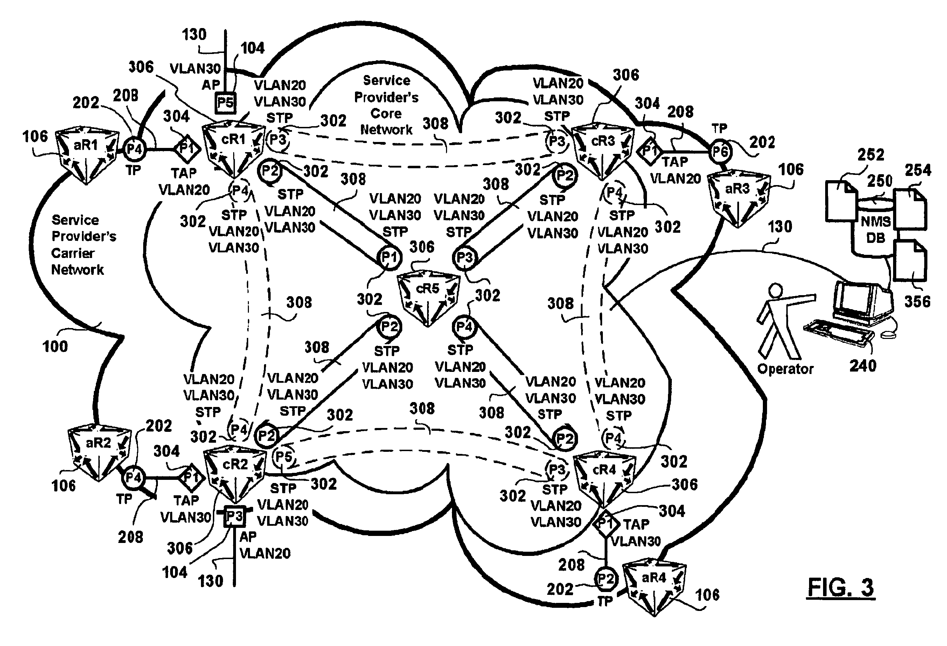

FIG. 3 is a schematic diagram showing configured interconnected data transport network elements providing backbone VLAN support.

In accordance with the above mentioned co-pending commonly assigned US patent application attorney reference 13598-US, each backbone VLAN is provisioned on all backbone trunk links 308 in the service provider's data transport network 100 - including stand-by designated backbone trunk links 308-dashed. This technique provides for backbone VLAN pre-provisioning at improved operational efficiencies and eliminates the need to determine specific in-use backbone trunk links 308 and specific in-use stackable trunk ports 302 on specific (core) switches 306 participating in the active in-use spanning-tree topology.

As the spanning-tree protocol prevents the formation of logical data transport loops, backbone VLAN provisioning over stand-by designated backbone trunk links 308-dashed is not a concern. In fact, pre-provisioning backbone trunk links 308-dashed for all provisioned backbone VLANs has the advantage of making the backbone trunk links 308-dashed ready to carry VLAN traffic should the spanning-tree reconfigure. VLAN provisioning database records held by each (core) switch 306 in the carrier's data transport network 100, show (see FIG. 3) the backbone VLAN identifiers associated with each stackable trunk port 302. Backbone VLAN auto-discovery is complicated by the above presented backbone VLAN provisioning methods and manual VLAN discovery is rendered inutile.

The service provider's data transport network 100 typically carries data traffic associated with more than one backbone VLAN. Backbone VLAN identifiers must be included in VLAN packet headers 422 (see FIG.4) to ensure VLAN data traffic differentiation. The packets 400 are switched through the core of the carrier's data transport network 100 using the backbone VLAN identifiers in accordance with the Riverstone solution.

It is understood that standard VLAN provisioning is performed independent of, and likely in parallel with, the backbone VLAN provisioning. Core switches 306-cR1 and 306-cR2 are shown to also have associated therewith VLAN access ports 104-P5 and 104-P3 respectively conveying VLAN data traffic in accordance with the IEEE 802.1Q VLAN protocol only. Although not shown, VLAN access ports 104 also specify standard VLAN identifiers corresponding to customer VLANs.

Although the Riverstone stackable VLAN solution provides an extended VLAN identification, the Riverstone solution alone does not enforce uniqueness of VLAN identifiers in support of VLAN traffic differentiation. The problem of inadvertent sharing of VLAN identifiers between VLAN customers is resolved by central backbone VLAN provisioning, as presented in the above mentioned co-pending commonly assigned US patent application attorney reference 13598-US.

In accordance with above mentioned co-pending commonly assigned US patent application attorney reference 13598-US, standard VLAN identifiers may be assigned by/to VLAN customers, while extended VLAN identifiers are managed by service providers. The separation enables centralized control of VLAN data traffic within carrier networks even though service providers do not enforce full control over standard VLAN identifier allocation. Additionally, the service providers have control over the associativity between VLAN customer standard VLAN identifiers and the extended VLAN identifiers. Typically and preferably the VLAN customers are not aware of the extended VLAN identifiers. For this reason the Riverstone solution brings about a backbone VLAN paradigm wherein: the extended VLAN identifiers are known as backbone VLAN identifiers defining corresponding backbone VLANs, trunk ports supporting the Riverstone solution are known as stackable trunk ports and the data transport trunk links associated therewith are known as backbone trunks. A new type of access port is also defined for switching VLAN data traffic onto backbone VLANs known as a tunnel access port. As opposed to standard VLAN access ports, tunnel access ports can be provisioned to convey data traffic associated with more than one standard VLAN. Tunnel access ports are associated with VLAN stackable trunks and the standard VLANs provisioned in connection therewith are unique within the group.

It is typical for core switches in the service provider's data transport network 100 to be enabled with the Riverstone solution. The definition of a core switch is somewhat blurred as the data transport industry is undergoing a "box consolidation" trend. The concepts will be described herein making reference to distinct access switches (106) and core switches (306) without limiting the invention thereto.

Needless to say, standard VLAN data traffic may be supported along with the backbone VLAN provisioning. Therefore VLAN provisioning equipment supporting IEEE 802.1Q VLANs and the Riverstone solution may not only coexist in the service provider's network, but often may be the same VLAN provisioning equipment. As such the physical data transport trunks may be the same while the VLAN data traffic is switched to logical VLAN access ports, logical VLAN trunk ports, logical tunnel access ports, and logical stackable trunk ports, respectively, based on standard and extended VLAN identifiers and switching rules. The central VLAN provisioning implementations enable careful selection of (backbone) VLAN identifiers and careful configuration of the switching rules to ensure VLAN traffic differentiation. Switching rules will be presented in more detail herein below with reference to FIG. 5.

VLAN provisioning is a service provider performed service which ensures the uniqueness of the (backbone) VLAN identifiers used in the carrier's data transport network 100. The centralized VLAN provisioning reduces VLAN provisioning overheads. Typically network management and service provisioning can and is performed in parallel via a multitude of NMS' 240. Therefore, so can (backbone) VLAN provisioning be performed in parallel. In accordance with such an implementation, a VLAN identifier roster 252, VLAN customer list 254, and a backbone VLAN identifier roster 256, are shared between all participating NMS' 240.

Reserved VLAN identifiers may also be included in the roster 252 of in-use VLAN identifiers to simplify VLAN provisioning. The reserved backbone VLAN identifiers may also be included in the roster 256 of in-use backbone VLAN identifiers to simplify backbone VLAN provisioning. The reserved (backbone) VLAN identifiers may not be surrendered for subsequent reuse. Backbone VLAN identifiers are shown schematically in the accompanying figures as VLAN ID 20, VLAN ID 30, etc., while standard VLAN ID as shown as VLAN ID 2, VLAN ID 3.

The definition of data transport (backbone) trunk links 308/208 includes the specification of origination and termination (stackable) trunk ports 302/202. The network management database NMS DB 250 (see FIG. 1, FIG. 2, FIG. 3) may hold data transport (backbone) trunk link definitions. In fact, each (core) switch 306/106 is unaware of (backbone) trunk links 308/208 and only aware of corresponding (stackable) trunk ports 302/202. (Backbone) trunk link 308/208 designations would be associated with (stackable) trunk ports 302/202 at each data network node 112 and switch 106/306.

Shown schematically in FIG. 5 are VLAN-specific data transport link definitions:
- a data transport link 130 conveying data traffic associated with a single VLAN identifier having VLAN access ports 104 at each end;
- a VLAN trunk link 208 conveying data traffic associated with multiple VLAN identifiers having trunk access ports 202 at each end;
- a VLAN trunk link 208 conveying data traffic associated with multiple VLAN identifiers having a trunk access port 202 at an end, and a tunnel access port 302 at the other end; and
- a backbone trunk link 308 conveying data traffic associated with multiple backbone VLAN identifiers having stackable access ports 202 at each end.

The association of each (backbone) VLAN identifier with all (backbone) trunk links 308/208 is typically implemented via (backbone) VLAN identifier associations with the corresponding (stackable) trunk ports 302/202. Moreover, in provisioning a (backbone) VLAN on a (backbone) trunk link 308/208, corresponding (stackable) trunk ports 302/202 on separate (core) switches 306/106, at each end of the (backbone) trunk link 308/208, must be configured. VLAN auto-discovery includes reconciliation of the nodal (backbone) trunk link 302/202 designations with the NMS DB 250 records as will be presented below with reference to FIG. 6, FIG. 7, and FIG. 8

Inevitably edge managed data network elements at the edge of a managed data transport network 100 are used to provide connectivity with adjacent data transport networks managed by peer service providers. Therefore (backbone) VLAN trunks 308/208 bridging two managed domains exist. For such (backbone) VLAN trunks 308/208, the (backbone) VLAN provisioning methods described above apply at least to the proximal managed corresponding (stackable) trunk ports 302/202. This emphasizes a need for port-based VLAN auto-discovery methods.

Varying VLAN service offerings blur the requirement for inclusion of VLAN access port 104 configuration into VLAN provisioning and therefore into VLAN auto-discovery. VLAN service offering exist in which customer premise equipment providing VLAN support are provided by the VLAN service provider. Therefore the VLAN service provider may at least managed the backbone side of the customer premise equipment providing the VLAN support. In accordance with such a service offering (see FIG. 2), a VLAN trunk 208 exists between the service provider's carrier network 100 and the particular customer site 110 with both VLAN trunk ports associated therewith falling in the service provider's management domain. VLAN access port configuration on the private side of the provided customer premise equipment falls under the customer's realm of management.

VLAN provisioning includes making provisions for multiplexing/demultiplexing VLAN data traffic onto/from the defined (backbone) VLANs respectively. The central VLAN provisioning solutions presented above, in multiplexing/demultiplexing VLAN data traffic onto/from a (backbone) VLAN, must ensure VLAN data traffic differentiation between VLAN customers.

FIG. 5 is a schematic diagram showing a VLAN identifier associativity hierarchy in provisioning VLAN services.

The backbone VLAN provisioning enforces VLAN data traffic differentiation between VLAN customers by creating port-based switching rules. Port-based switching rules benefit from the fact that each tunnel access port 304 conveys VLAN traffic associated with an already differentiated group of standard VLANs, whether all standard VLANs associated therewith are associated with a single VLAN customer or not. Port-based switching rules also include the specification of standard VLAN access ports 104.

Besides the tunnel access port 304 associations with a backbone VLAN, individual standard VLANs conveyed therethrough can be multiplexed/demultiplexed onto/from a backbone VLAN. The switching rules therefore may be defined between standard VLAN identifiers and extended backbone VLAN identifiers which provides an increased control granularity in implementing VLAN data traffic differentiation.

The following switching rules may be defined between:
- a VLAN access port 104 on the access side with another VLAN access port 104 on the backbone side enabling data traffic associated with a single standard VLAN identifier to be switched therebetween;
- a VLAN access port 104 on the access side with a VLAN trunk port 202 on the backbone side enabling data traffic associated with a single standard VLAN identifier to be switched onto a VLAN trunk 208;
- a VLAN access port 104 on the access side with another stackable trunk port 302 on the backbone side enabling data traffic associated with a single standard VLAN identifier to be switched onto a backbone trunk 308
- a VLAN trunk port 202 on the access side with another VLAN trunk port 202 on the backbone side enabling data traffic associated with multiple standard VLAN identifiers to be switched therebetween; and
- a tunnel access port 304 on the access side with a stackable trunk port 302 on the backbone side enabling data traffic associated with multiple standard VLAN identifiers to be switched onto a backbone trunk 308.

All of the above switching rules are specified in the upload direction switching rules for the download direction may be defined mutatis mutandis.

Therefore, multiple standard VLANs, multiple VLAN access ports 104, and multiple tunnel access ports 304 may be associated with a single backbone VLAN provided that all standard VLANs provisioned over the single backbone VLAN trunk are unique - that is: associations between IEEE 802.1Q VLAN identifiers and extended Riverstone proposed VLAN identifiers are unique-therefore ensuring data traffic differentiation across the carrier network 100.

The body of actual associations forms the basis for the switching rules mentioned above. Note that the VLAN provisioning techniques are performed centrally via the NMS 240 while the resulting switching rules are associated with switches in the service provider's network 100. VLAN auto-discovery is complicated by the decentralized storage of the switching rules in each corresponding switch 106/306.

Having described at length (backbone) VLAN provisioning scenarios, VLAN auto-discovery methods concern themselves with the determination of configuration information regarding already provisioned VLANs. VLAN auto-discovery must take into account that although NMS DB 250, VLAN identifier roster 252, VLAN customer roster 254, backbone VLAN identifier roster 256, port VLAN provisioning records, nodal switching rules, etc. exist, discrepancies may also exist. VLAN auto-discovery is complete only when all VLAN provisioning information has been correlated and any discrepancies resolved.

It is noted that data transport (backbone) trunk 308/208 definitions were not mentioned for consideration in the above sources of information necessary for VLAN auto-discovery. The omission deserves mention herein as in the broader sense data the transport link 108 definitions specify the physical communications network interconnection topology. Without a known physical communications network interconnection topology, VLAN auto-discovery may not have a basis. Communications network failures will affect the physical communications network interconnection topology and therefore VLAN auto-discovery may be performed in connection with physical communications network interconnection topology auto-discovery methods. Such physical communications network interconnection topology auto-discovery methods are performed centrally by the above mentioned Alcatel 5620 NMS solution.

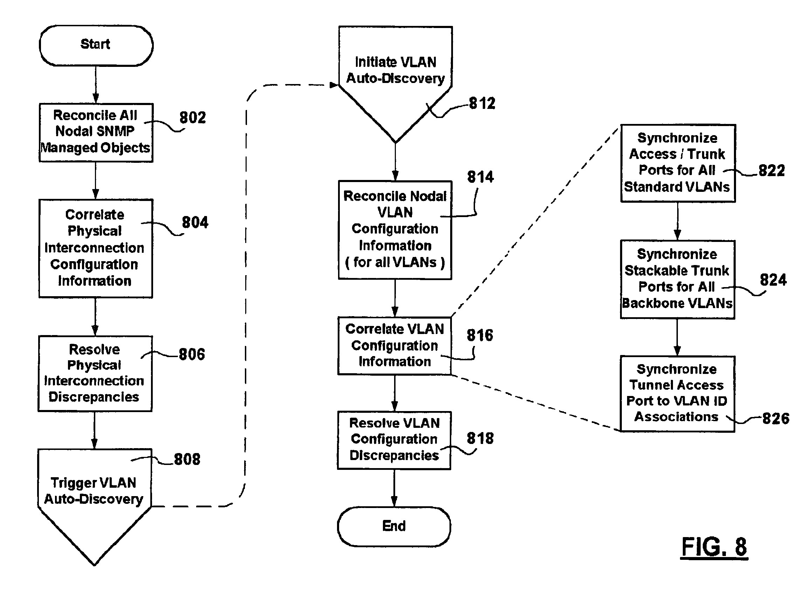

FIG. 8 is a flow diagram showing, in accordance with an exemplary embodiment of the invention, process steps implementing VLAN auto-discovery.

In short, various managed communications network entities are modeled via manageable entity objects forming a manageable object derivation hierarchy 600 schematically presented in FIG. 6. Various commands are issued into the communications network 100 to request physical communications infrastructure interconnection configuration. Exemplary implementations include, without limiting the invention thereto, the use of a Simple Network Management Protocol (SNMP) requests to reconcile 802 one-by-one all SNMP managed objects of each node including physical ports 102 with the NMS DB 250 updates the containment hierarchy 700.

The received interconnection configuration information regarding the physical communications infrastructure is correlated 804. A model of the interconnected managed communications network entities is held in a corresponding containment hierarchy 700 of instantiated managed object entities schematically presented in FIG. 7. Discrepancies must be resolved 806 to the extent possible before VLAN auto-discovery is initiated (812). Further exemplary information regarding the managed object derivation hierarchy is provided in co-pending commonly assigned United States Patent Applications serial number 10/021,080, filed on December 19^{th}, 2001, entitled "NETWORK MANAGEMENT SYSTEM ARCHITECTURE" incorporated herein by reference, and co-pending commonly assigned United States Patent Applications serial number 10/021,629, filed on December 19^{th}, 2001, entitled "METHOD OF INVOKING POLYMORPHIC OPERATIONS IN A STATICALLY TYPED LANGUAGE" also incorporated herein by reference.

Of worthy note, the above presented (backbone) VLAN provisioning methods are distinct from the operation of the spanning-tree protocol which operates on physical communications network interconnection topology information.

In accordance with a preferred embodiment of the invention, VLAN auto-discovery of in a bridged network is performed centrally via an NMS 240.

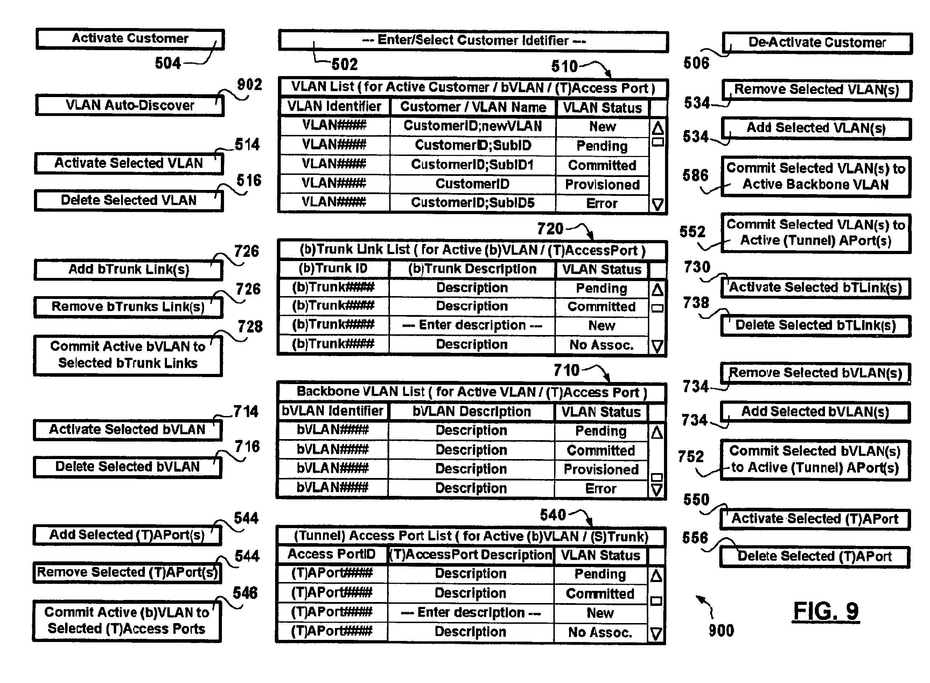

The NMS 240 includes an activator which initiates VLAN auto-discovery 812 (see FIG.8). The activator may be an interactive element 902 (see FIG. 9) activated by an operator interacting with the NMS 240. The activator may be triggered (periodically) at the expiration of a predetermined time interval. The completion of physical network interconnection (auto-) discovery may also trigger (812) the initiation of VLAN auto-discovery. The invention is not limited by the particular initiating event (812) used.

After the initiating action 812 occurs, the VLAN configuration information is gathered 814 from each communications network node 112 and synchronized with the NMS DB 250. The NMS 240 may gather the VLAN configuration information for multiple communications network nodes 112 in parallel.

An exemplary implementation includes issuing, for each communications network node 112 Command Line Interface (CLI) reconcile requests for all managed VLAN objects associated therewith including: port related (backbone) trunk designations, port-to-VLAN associations (information held in VLAN port configuration database records), and VLAN-to-VLAN associations (switching rules - customer bindings). CLI requests are used because there may be VLAN managed object configuration information which can not be collected using SNMP techniques since SNMP MIBs (Managed Information Base records) have not been defined for all VLAN related information held by communications network nodes 112. Co-pending commonly assigned United States Patent Application serial number 10/115,900, filed on April 5^{th}, 2002, entitled "COMMAND LINE INTERFACE PROCESSOR" incorporated herein by reference provides exemplary methods of issuing CLI requests.

Having received all VLAN configuration information, the gathered VLAN configuration information is correlated 816 and includes:
- access port and trunk port synchronization 822 to complete nodal standard VLAN discovery;
- stackable trunk port synchronization 824 to complete backbone VLAN discovery; and
- tunnel access port to VLAN ID association synchronization 826.

Subsequently VLAN auto-discovery proceeds to resolving VLAN configuration discrepancies 818.

FIG. 9 is a schematic diagram showing, in accordance with the exemplary embodiment of the invention, interactive elements of a human-machine interface 900 used in effecting VLAN auto-discovery.

The completion of the correlation step 816 Results in the display of the correlated VLAN information on the a human-machine interface associated with the NMS 240. Various methods of displaying the VLAN information exist including graphical network maps. Shown in FIG. 9 are interactive elements enabling an operator to interact with the NMS 240 to effect VLAN auto-discovery and resolve VLAN configuration discrepancies 818.

Button 902 may be used to initiate the VLAN auto-discovery process shown in FIG. 8.

In short, the steps performed by an analyst in resolving 818 VLAN discrepancies, using the various human-machine interface elements include:
- inspecting in a VLAN customer context at least one of: a VLAN list 510 and an access port list 540, to determine which standard VLANs are associated therewith;
- inspecting in a (tunnel) access port context at least one of: the VLAN list 510, a backbone VLAN list 710, and (backbone) trunk list 720 to determine which standard/backbone VLAN is associated therewith;
- in a backbone VLAN context ensuring that a one of an individual standard VLAN and a VLAN access port each associated with a standard VLAN ID, is associated therewith if, the associated standard VLAN identifier, regardless of VLAN customer association, is not already associated with the backbone VLAN specified by the backbone VLAN context;
- in a backbone VLAN context ensuring that a tunnel access port is associated with a single backbone VLAN if, each one of a group of standard VLAN identifiers associated with the tunnel access port, regardless of VLAN customer associativity, is not already provisioned over the backbone VLAN specified by the backbone context; and
- in a (backbone) VLAN context ensuring that the (backbone) VLAN is correctly provisioned over associated (stackable) trunk links.

The uniqueness of the customer name/description may be ensured by comparing a specified customer identifier provided with the VLAN customer list 254 tacking active customer identifiers. The human-machine interface 900, provides for customer binding editing. Interaction with VLAN customer profiles is provided via interaction elements 502, 504, and 506. The list 254 of active customer identifiers may be available for browsing and display via the compound selection box 502.

All discovered customer VLANs are displayed in the VLAN list 510 with the current VLAN provisioning status. In the event in which a particular VLAN identifier / VLAN name combination is associated with two different customers or any other VLAN provisioning discrepancies have occurred, the VLAN status displayed is "Error" otherwise the VLAN status is "Provisioned".

All discovered backbone VLANs are displayed in the VLAN list 710 with the current VLAN provisioning status. Multiple standard VLANs, multiple VLAN access ports 104, and multiple tunnel access ports 304 may be associated with a single backbone VLAN, provided that all standard VLANs provisioned over the single backbone VLAN trunk are unique - that is: associations between IEEE 802.1Q VLAN identifiers and extended Riverstone proposed VLAN identifiers are unique - therefore ensuring data traffic differentiation across the carrier network 100. If provisioning discrepancies have occurred, the VLAN status displayed is "Error" otherwise the VLAN status is "Provisioned".

All discovered (backbone) trunk links 308/208 are displayed in a (backbone) Trunk List 720 along with corresponding VLAN status. An aggregation of (stackable) trunk port 302/202 operational statuses may also be included in the trunk VLAN provisioning status. If provisioning discrepancies have occurred, the VLAN status displayed is "Error" otherwise the VLAN status is "Provisioned".

Dependent on the particular implementation, a wide variety of VLAN provisioning status states my be defined, probed for and detected. The feedback provided via the VLAN provisioning status reporting functionality provided greatly reduces VLAN provisioning overheads by enabling an analyst to quickly identify, interpret, and address VLAN provisioning failures.

Visual feedback is therefore provided in ensuring that VLAN auto-discovery has been successfully completed across the data transport network 100.

Various interactive elements of the human-machine interface 900 are used in: creating the discrepancy resolution contexts mentioned above; selecting VLAN entities such as: a customer profile, VLANs, backbone VLANs, (backbone) trunks, (tunnel) access ports, etc.; adding/removing corresponding selected VLAN entities from selection; deleting selected VLAN entities; creating associations between selected VLAN entities in accordance with the active discrepancy resolution context in resolving VLAN auto-discovery discrepancies.

For certainty, with all backbone VLANs provisioned over all physical infrastructure, standard VLAN identifiers associated with each backbone VLAN must be distinct and unique therebetween. Therefore, no two same standard VLAN identifiers each associated with a different backbone VLAN can be associated with the same customer site 110 and in particular with the same VLAN access port 104.

The embodiments presented are exemplary only and persons skilled in the art would appreciate that variations to the above described embodiments may be made without departing from the scope of the invention. The scope of the invention is solely defined by the appended claims.

## Claims

1. VLAN auto-discovery application tool comprising:
a. a activator for initiating a VLAN configuration auto-discovery process performed on field installed communications network equipment;
b. a correlator processing VLAN configuration information; and
c. a plurality of interactive elements collectively displaying VLAN provisioning information on an associated human-machine interface
the correlator derives VLAN-specific configuration ensuring data traffic differentiation between provisioned VLANs
**characterized in that** the correlator is further operable to derive a VLAN-specific configuration regarding a one of a standard VLAN and a stackable backbone VLAN.

2. VLAN auto-discovery application tool as claimed in claim 1, wherein the correlator is further adapted to derive a VLAN-specific configuration from VLAN configuration information received from field installed communications network equipment.

3. VLAN auto-discovery application tool as claimed in claim 1 or claim 2, further comprising an associated information store holding VLAN provisioning information.

4. VLAN auto-discovery application tool as claimed in any one of claims 1 to3, wherein the correlator is further operable to determine whether a plurality of provisioned standard VLANs are configured to provide communications services to a single customer site, the determination representing a VLAN provisioning error.

5. VLAN auto-discovery application tool as claimed in any one of claims 1 to 4, wherein the correlator is further operable to determine whether a plurality of provisioned standard VLANs having a same VLAN identifier are associated with the same stackable backbone VLAN, the determination representing a VLAN provisioning error.

6. VLAN auto-discovery application tool as claimed in any one of claims 1 to 5, wherein the correlator is further operable to ensure uniqueness between standard to stackable backbone VLAN identifier associations across the communications network.

7. VLAN auto-discovery application tool as claimed in any one of claims 1 to 6, wherein the plurality of interactive elements collectively displaying VLAN provisioning information is further adapted to display VLAN provisioning errors.

8. Network management system **characterized in that** it comprises a VLAN auto-discovery application tool as claimed in any one of claims 1 to 7 to effect VLAN auto-discovery in a communications network.

9. Method of automatically determining Virtual Local Area Network (VLAN) configuration in a communications network comprised of network nodes and interconnecting links, the method comprising the steps of:
a. correlating VLAN configuration information gathered from a plurality of communications network nodes in the communications network by:
i. synchronizing access port and trunk port VLAN configuration information for all discovered standard VLANs,
ii. synchronizing stackable trunk port VLAN configuration information for all discovered backbone VLANs, and
iii. synchronizing tunnel access port to VLAN Identifier associations;
**characterized in that** it further comprises the steps of:
b. resolving VLAN configuration discrepancies by performing steps comprised in :
- inspecting in a VLAN customer context at least one of: a VLAN list (510) and an access port list (540), to determine which standard VLANs are associated therewith;
- inspecting in a tunnel access port context at least one of: the VLAN list (510), a backbone VLAN list (710), and backbone trunk list (720) to determine which standard/backbone VLAN is associated therewith;
- in a backbone VLAN context ensuring that a one of an individual standard VLAN and a VLAN access port each associated with a standard VLAN lD, is associated therewith if, the associated standard VLAN identifier, regardless of VLAN customer association, is not already associated with the backbone VLAN specified by the backbone VLAN context;
- in a backbone VLAN context ensuring that a tunnel access port is associated with a single backbone VLAN if, each one of a group of standard VLAN identifiers associated with the tunnel access port, regardless of VLAN customer associativity, is not already provisioned over the backbone VLAN specified by the backbone context; and
- in a backbone VLAN context ensuring that the backbone VLAN is correctly provisioned over associated stackable trunk links;
the uniqueness of the customer name/description being ensured by comparing a specified customer identifier provided with the VLAN customer list (254) tracking active customer identifiers; and
c. extracting a representation of a one of a standard VLAN configuration and a backbone VLAN configuration.

10. Method of automatically determining VLAN configuration as claimed in claim 9, the method further comprising a steps of:
a. collecting managed object entity configuration information from each communications network entity in the communications network;
b. correlating the collected managed object entity configuration information; and
c. resolving discrepancies in the correlated managed object entity configuration
the correlation of the managed object entity configuration information and the resolution of discrepancies therein provides physical communications infrastructure topology discovery.

11. Method of automatically determining VLAN configuration as claimed in claim 10, wherein the step of collecting managed object entity configuration information, the method further comprises a step of: sending requests for the managed object entity configuration information in accordance with a network management protocol.

12. Method of automatically determining VLAN configuration as claimed in claim 11, wherein the network management protocol includes the Simple Network Management Protocol (SNMP).

13. Method of automatically determining VLAN configuration as claimed in any one of claims 9 to 12, the method further comprising a prior step of: issuing Command Line Interface (CLI) commands requesting the gathered VLAN configuration information.

14. Method of automatically determining VLAN configuration as claimed in any one of claims 9 to 13, wherein subsequent to correlating VLAN configuration information the method further comprises a step of: storing the correlated VLAN configuration information in retrievable storage.

15. Method of automatically determining VLAN configuration as claimed in any one of claims 9 to 14, wherein correlating VLAN configuration information, the method further comprises a step of: updating VLAN configuration information held in retrievable storage.

16. Method of automatically determining VLAN configuration as claimed in any one of claims 9 to 15, the method further comprising a prior step of: initiating the automatic determination of VLAN configuration in response to an initiating event.

17. Method of automatically determining VLAN configuration as claimed in claim 16, wherein the initiating event includes one of a user interface action and a periodic instigation.

## Patentansprüche

1. Anwendungswerkzeug für die automatische VLAN-Entdeckung, mit:
a. einem Aktivator zum Aktivierten eines an einer Feldkommunikationsnetwerkausstattung ausgeführten Prozesses für die automatische Entdeckung einer VLAN-Konfiguration;
b. einem Korrelator zum Verarbeiten von VLAN-Konfigurationsinformationen; und
c. einer Vielzahl von interaktiven Elementen, die gemeinsam die VLAN-Bereitstellungsinformationen an einer assoziierten Anwenderschnittstelle anzeigen;
wobei der Korrelator eine VLAN-spezifische Konfiguration unter der Gewährleistung einer Datenverkehrdifferenzierung zwischen bereitgestellten VLAN ableitet,
**dadurch gekennzeichnet, dass** der Korrelator für die Ableitung einer VLAN-spezifischen Konfiguration betreffend eines VLAN unter einem Standard-VLAN und einem Rückgrat-VLAN weiter wirkend ist.

2. Anwendungswerkzeug für die automatische VLAN-Entdeckung nach Anspruch 1, bei dem der Korrelator für die Ableitung einer VLAN-spezifischen Konfiguration von aus einer Feldkommunikationsnetwerkausstattung gestammten VLAN-Konfigurationsinformationen weiter angepasst ist.

3. Anwendungswerkzeug für die automatische VLAN-Entdeckung nach Anspruch 1 oder Anspruch 2, weiter umfassend einen assoziierten Informationsspeicher mit VLAN-Bereitstellungsinformationen.

4. Anwendungswerkzeug für die automatische VLAN-Entdeckung nach einer der Ansprüche 1 bis 3, bei dem der Korrelator für die Bestimmung weiter wirkend ist, ob eine Vielzahl von bereitgestellten Standard-VLAN für die Bereitstellung von Kommunikationsdiensten für einen einzigen Kundenstandort ausgestaltet ist, wobei die Bestimmung einen VLAN-Bereitstellungsfehler darstellt.

5. Anwendungswerkzeug für die automatische VLAN-Entdeckung nach einer der Ansprüche 1 bis 4, bei dem der Korrelator für die Bestimmung weiter wirkend ist, ob eine Vielzahl von bereitgestellten Standard-VLAN mit dem selben VLAN-Kennzeichnen mit dem selben stapelbaren Rückgrat-VLAN assoziiert sind, wobei die Bestimmung einen VLAN-Bereitstellungsfehler darstellt.

6. Anwendungswerkzeug für die automatische VLAN-Entdeckung nach einer der Ansprüche 1 bis 5, bei dem der Korrelator für die Gewährleistung der Einzigartigkeit zwischen Assoziationen von Standard-VLAN-Kenzeichnen mit stapelbaren Rückgrat-VLAN-Kenzeichnen im ganzen Kommunikationsnetzwerk weiter wirkend ist.

7. Anwendungswerkzeug für die automatische VLAN-Entdeckung nach einer der Ansprüche 1 bis 6, bei dem die Vielzahl von interaktiven, gemeinsam VLAN-Bereitstellungsinformationen anzeigenden Elementen für die Anzeigung von VLAN-Bereitstellungsfehlern weiter angepasst sind.

8. Netzwerkverwaltungssystem, **dadurch gekennzeichnet dass** es einen Anwendungswerkzeug für die automatische VLAN-Entdeckung nach einer der Ansprüche 1 bis 7 zur Ausführung einer automatische VLAN-Entdeckung in einem Kommunikationsnetzwerk umfasst.

9. Verfahren für die automatische Entdeckung einer VLAN-Konfiguration (VLAN: Virtual Local Area Network) in einem Kommunikationsnetwerk mit Netzwerkknoten und Verbindungsgliedern, mit den Schritten:
a. der Korrelation von aus einer Vielzahl von Kommunikationsnetzwerkknoten im Kommunikationsnetzwerk gesammelten VLAN-Konfigurationsinformationen, indem:
i. die VLAN-Konfigurationsinformationen des Zugangports und des Trunkports für alle entdeckte Standard-VLAN synchronisiert werden,
ii. die stapelbare VLAN-Konfigurationsinformationen des Trunkports für alle entdeckte Rückgrat-VLAN synchronisiert werden, und
iii. die Assoziationen von Tunnelzugangportkenzeichnen mit VLAN-Kennzeichen synchronisiert werden;
**dadurch gekennzeichnet** durch die zusätzliche Schritte:
b. der Lösung von VLAN-Konfigurationsunterschieden durch die Ausführung der Schritte:
- der überwachung mindestens einer Liste unter einer VLAN-Liste (510) und einer Zugangportliste (540) in einem VLAN-Kundenkontext für die Bestimmmung, welche standard-VLAN damit assoziiert sind;
- der Überwachung mindestens einer Liste unter einer VLAN-Liste (510), einer Rückgrat-VLAN-Liste (710), und einer Rückgrat-Trunkliste (720) in einem Tunnelzugangportkontext für die Bestimmung, welche Standard- oder Rückgrat-VLAN damit assoziiert werden;
- der Gewährleistung in einen Rückgrat-VLAN-Kontext, dass ein unter einem individuellen Standard-VLAN und einem VLAN-Zugangport, welche jeweils mit einem Standard-VLAN-Kennzeichnen ID assoziiert sind, wenn das assoziierte Standard-VLAN-Kennzeichnen unabhängig von der VLAN-Kundenassoziation nicht schon mit dem vom Rückgrat-VLAN-Kontext spezifierten Rückgrat-VLAN assoziiert wird;
- der Gewährleistung in einem Rückgrat-VLAN-Kontext, dass ein Tunnelzugangport mit einem einzigen Rückgrat-VLAN assoziiert ist, wenn jedes Kennzeichnen einer Gruppe von Standard-VLAN-Kennzeichnen, assoziiert mit dem Tunnelzugangport unabhängig von der VLAN-Kundenassoziation, nicht schon durch den vom Rückgratkontext spezifizierten Rückgrat-VLAN bereitgestellt wird; und
- der Gewährleistung in einem Rückgrat-VLAN-Kontext, dass der Rückgrat-VLAN durch assoziierte stapelbare Trunkverbindungsglieder einwandfrei bereitgestellt ist;
wobei die Einzigartigkeit der Kundenname oder Kundenbeschreibung durch die Vergleichung eines bereitgestellten spezifizierten Kundenkennzeichnen mit der VLAN-Kundenliste (254) durch die Suche von aktiven Kundenkennzeichnen gewährleistet wird; und
c. der Extrahierung einer Darstellung einer Konfiguration unter einer Standard-VLAN-Konfiguration und einer Rückgrat-VLAN-Konfiguration.

10. Verfahren für die automatische Entdeckung einer VLAN-Konfiguration nach Anspruch 9, weiter umfassend die Schritte:
a. der Sammlung von verwalteten Objektentitätskonfigurationsinformationen aus jeder Kommunikationsnetzwerkentität im Kommunikationsnetwerk;
b. der Korrelation von gesammelten verwalteten objektentitätskonfigurationsinformationen; und
c. der Lösung von Unterschieden in der korrelierten verwalteten Objektentitätskonfiguration
wobei die Korrelation der verwalteten Objektentitätskonfigurationsinformationen und der Lösung von Unterschieden die Entdeckung der physikalische Kommunikationsinfrastrukturtopologie bereitstellt.

11. Verfahren für die automatische Bestimmung einer VLAN-Konfiguration nach Anspruch 10, wobei zusätzlich zur Schritt der Sammlung von verwalteten Objektentitätskonfigurationsinformationen das Verfahren einen Schritt der Sendung von Antragen für die verwalteten Objektentitätskonfigurationsinformationen gemäß einem Netzwerkverwaltungsprotokoll aufweist.

12. Verfahren für die automatische Bestimmung einer VLAN-Konfiguration nach Anspruch 11, wobei das Netzwerkverwaltungsprotokoll das Protokoll Simple Network Management Protocol (SNMP) enthält.

13. Verfahren für die automatische Bestimmung einer VLAN-Konfiguration nach einer der Ansprüche 9 bis 12, wobei das Verfahren einen Vorschritt der Aufgabe von Befehlen Command Line Interface (CLI) weiter umfasst, welche die gesammelte VLAN-Konfigurationsinformationen beantragen.

14. Verfahren für die automatische Bestimmung einer VLAN-Konfiguration nach einer der Anspruche 9 bis 13, wobei nach der Korrelation von VLAN-Konfigurationsinformationen das Verfahren den Schritt der Speicherung der korrelierten VLAN-Konfigurationsinformationen in einem durchsuchbaren Speicher weiter aufweiset.

15. Verfahren für die automatische Bestimmung einer VLAN-Konfiguration nach einer der Ansprüche 9 bis 14, wobei zusätzlich zur Korrelation der VLAN-Konfigurationsinformationen das Verfahren einen Schritt der Aktualisierung der VLAN-Konfigurationsinformationen im durchsuchbaren Speicher aufweist.

16. Verfahren für die automatische Bestimmung einer VLAN-Konfiguration nach einer der Ansprüche 9 bis 15, wobei das Verfahren einen vorschrift der Aktivierung der automatische Bestimmung einer VLAN-Konfiguration als Antwort auf ein Aktivierungsereignis weiter aufweist.

17. Verfahren für die automatische Bestimmung einer VLAN-Konfiguration nach Anspruch 16, wobei das Aktivierungsereignis eine unter einer Anwenderschnittstellenaktion und einer periodischen Anregung enthält.

## Revendications

1. Outil d'application pour la découverte automatique de VLAN, ledit outil d'application comprenant :
a. un activateur pour activer un processus de découverte automatique d'une configuration VLAN, exécuté sur un équipement de réseau de communication dans un champ ;
b. un corrélateur traitant des informations de configuration VLAN ; et
c. une pluralité d'éléments interactifs présentant collectivement des informations de fourniture de VLAN sur une interface homme/machine associés ;
le corrélateur obtenant une configuration spécifique à un VLAN en garantissant différenciation de trafic de données entre des VLAN fournis,
**caractérisé en ce que** le corrélateur est en outre opérant pour déduire une configuration spécifique à un VLAN parmi un VLAN standard et un VLAN de dorsale empilable.

2. Outil d'application pour la découverte automatique de VLAN selon la revendication 1, dans lequel le corrélateur est en outre adapté pour déduire une configuration spécifique à un VLAN à partir d'informations de configuration VLAN reçues de l'équipement de réseau de communication dans le champ.

3. Outil d/application pour la découverte automatique de VLAN selon la revendication 1 ou la revendication 2, comprenant en outre une mémoire d'informations associés conservant des informations de fourniture de VLAN.

4. Outil d'application pour la découverte automatique de VLAN selon l'une quelconque des revendications 1 à 3, dans lequel le corrélateur est en outre opérant pour déterminer si une pluralité de VLAN standards fournis sont configurés pour fournir des services de communication à un site client unique, la détermination représentant une erreur de fourniture de VLAN.

5. Outil d'application pour la découverte automatique de VLAN selon l'une quelconque des revendications 1 à 4, dans lequel le corrélateur est en outre opérant pour déterminer si une pluralité de VLAN standards fournis possédant un même identificateur de VLAN sont associés au même VLAN de dorsale empilable, la détermination représentant une erreur de fourniture de VLAN.

6. Outil d'application pour la découverte automatique de VLAN selon l'une quelconque des revendications 1 à 5, dans lequel le corrélateur est en outre opérant pour garantir l'unicité entre des associations d'identificateurs de VLAN standard à des identificateurs de VLAN de dorsale empilable dans tout le réseau de communication.

7. Outil d'application pour la découverte automatique de VLAN selon l'une quelconque des revendications 1 à 6, dans lequel la pluralité d'éléments interactifs présentant collectivement des informations de fourniture de VLAN est en outre adaptée pour présenter des erreurs de fourniture de VLAN.

8. Système de gestion de réseaux, **caractérisé en ce qu'**il comprend un outil d'application pour la découverte automatique de VLAN selon l'une quelconque des revendications 1 à 7 pour effectuer une découverte automatique de VLAN dans un réseau de communication.

9. Procédé de détermination automatique d'une configuration de réseau local virtuel (VLAN) dans un réseau de communication constitué de noeuds de réseau et de liens d'interconnexion, le procédé comprenant les étapes :
i. de synchronisation des informations de configuration VLAN du port d'accès et du port de tronc pour tous les VLAN standards découverte,
ii. de synchronisation d'informations de configuration VLAN empilable à port de tronc pour tous les VLANS de dorsale découverts, et
iii. de synchronisation des associations d'un identificateur d'un port d'accès à un tunnel à un identificateur de VLAN ;
**caractérisé en ce qu'**il comprend en outre les étapes :
b. de résolution de différences de configuration VLAN en exécutant les étapes consistant à :
- inspecter dans un contexte de client VLAN au moins une liste parmi : : une liste de VLAN (510) et une liste de ports d'accès (540), pour déterminer quels sont les VLAN standards qui sont associés ;
- inspecter dans un contexte de ports d'accès à un tunnel au moins une liste parmi : la liste de VLAN (510), une liste de VLAN de dorsale (710), et une liste de troncs de dorsale (720) pour déterminer quel est le VLAN standard/de dorsale qui est associé ;
- garantir dans un contexte de VLAN de dorsale qu'un parmi un VLAN standard individuel et un port d'accès à un VLAN associé chacun à un identificateur ID de VLAN standard est associé si l'identificateur de VLAN standard associé, quelle que soit l'association de client VLAN, n'est pas déjà associé au VLAN de dorsale spécifié par le contexte de VLAN de dorsal ;
- garantir dans un contexte de VLAN de dorsale qu'un port d'accès à un tunnel est associé à un seul VLAN de dorsale si, chaque identificateur d'un groupe d'identificateurs de VLAN standard associés au port d'accès à un tunnel, quelle que soit l'associativité de client VLAN, n'est pas déjà fourni sur le VLAN de dorsale spécifié par le contexte de VLAN de dorsale ; et
- garantir dans un contexte de VLAN de dorsale que le VLAN de dorsale est fourni correctement sur des liens de troncs empilables associes ;
l'unicité du nom/de la description de client, étant garantie en comparant un identificateur de client spécifié fourni avec la liste de clients VLAN (254) en recherchant des identificateurs de clients actifs ; et
c. d'extraction d'une représentation d'une configuration parmi une configuration VLAN standard et une configuration VLAN de dorsale.

10. Procédé de détermination automatique d'une configuration VLAN selon la revendication 9, le procédé comprenant en outre une étape :
a. de collecte d'informations de configuration d'entités/objets gérées à partir de chaque entité de de communication le réseau de communication ;
b. de corrélation des informations de configuration d'entités/objets gérées collectées ; et
c. de résolution de différences les informations de configuration d'entités/objets gérées corrélées,
la corrélation des informations de configuration d'entités/objets gérées et la résolution de différences dans ces informations fournissant une découverte de la topologie de l'infrastructure de communication physique.

11. Procédé de détermination automatique d'une configuration VLAN selon la revendication 10, dans lequel en plus de l'étape de collecte d'informations de configuration d'entités/objets gérées le procédé comprend une étape d'envoi de requêtes relatives aux informations de configuration d'entités/objets gérées conformément à un protocole de gestion de réseau.

12. Procédé de détermination automatique d'une configuration VLAN selon la revendication 11, dans lequel le protocole de gestion de réseau inclut le protocole Simple Network Management Protocol (SNMP).

13. Procédé de détermination automatique d'une configuration VLAN selon l'une quelconque des revendications 9 à 12, le procédé comprenant en outre une étape préalable de délivrance de commandés Command Line Interface (CLI) demandant informations de configuration VLAN collectées.

14. Procédé de détermination automatique de configuration VLAN selon l'une quelconque des revendications 9 à 13, dans lequel, après la corrélation des informations de configuration VLAN, le procédé comprend en outre une étape de mémorisation des informations de configuration VLAN corrélées dans une mémoire consultable.

15. Procédé de détermination automatique d'une configuration VLAN selon l'une quelconque des revendications 9 à 14, dans lequel après la corrélation des informations de configuration VLAN, le procédé comprend en outre une étape d'actualisation des informations de configuration VLAN contenues dans la mémoire consultable.

16. Procédé de détermination automatique d'une configuration VLAN selon l'une quelconque des revendications 9 à 15, le procédé comprenant en outre une étape préalable d'activation de la détermination automatique de la configuration VLAN en à un d'activation.

17. Procédé de détermination automatique de configuration VLAN selon la revendication 16, dans lequel l'événement d'activation inclut un parmi une action d'interface utilisateur et une instigation périodique.
